# DEMANDE DE BREVET EUROPEEN

(11) **EP 3 418 980 A1**
(43) Date de publication de la demande: **26.12.2018**
(21) Numéro de dépôt: 18178875.3
(22) Date de dépôt: 20.06.2018
(51) Int. Cl.: G07B 15/00, G08G 1/01, G07B 17/00

(54) **BORNE DE PAIEMENT, SYSTÈME DE GESTION D'UN PRODUIT ET/OU D'UN SERVICE ASSOCIÉ ET PROCÉDÉ DE COLLECTE DE DONNÉES CORRESPONDANT**

(30) Priorité: 21.06.2017 FR 1755655
(71) Demandeur: Parkeon, 75015 Paris (FR)
(72) Inventeur: MOLÉ, Julien, 39600 ARBOIS (FR); LAGNIÉ, David, 25410 OSELLE-ROUTELLE (FR); MAUREL, Alexandre, 25000 BESANCON (FR); MARTINEZ, Franck, 25170 EMAGNY (FR)
(74) Mandataire: Lavoix

(57) **Abrégé**

La borne de paiement (4), disposée en voirie et utilisable pour l'achat d'un produit et/ou d'un service, est configurée pour communiquer avec un serveur informatique (6) distant. La borne de paiement (4) est munie d'un dispositif de capture de données (40) configuré pour capter des données de circulation relatives à des véhicules circulant à proximité de la borne de paiement (4) et/ou pour capter des données environnementales relatives à la qualité de l'environnement à proximité de la borne de paiement (4), la borne de paiement (4) étant configurée pour l'envoi des données capturées au serveur informatique (6).

## Description

La présente invention concerne le domaine des bornes de paiement situées dans l'espace public et en accès libre pour la vente d'un produit et/ou d'un service.

FR 2 968 814 A1 divulgue un horodateur de stationnement configuré pour fournir un service payant d'envoi d'un message de type SMS (de l'anglais Short Message System), MMS (de l'anglais Multimédia Messaging Service) ou courriel, le message étant éventuellement accompagné d'une image, d'une vidéo ou d'un contenu sonore capturé par un dispositif de capture de l'horodateur de stationnement ou reçu par l'horodateur de stationnement par l'intermédiaire d'un dispositif de communication à courte distance de l'horodateur de stationnement.

Un des buts de l'invention est de proposer une borne de paiement offrant une fonctionnalité supplémentaire.

A cet effet, l'invention propose une borne de paiement disposée en voirie et utilisable pour l'achat d'un produit et/ou d'un service, la borne de paiement étant configurée pour communiquer avec un serveur informatique distant, dans lequel la borne de paiement est munie d'un dispositif de capture de données configuré pour capter des données de circulation relatives à des véhicules circulant à proximité de la borne de paiement et/ou pour capter des données environnementales relatives à la qualité de l'environnement à proximité de la borne de paiement, la borne de paiement étant configurée pour l'envoi des données capturées au serveur informatique.

Une borne de paiement disposée en voirie et reliée à un serveur informatique peut avantageusement servir de support à un capteur de données environnementales ou des données de circulation routière, qui peuvent être transmises de manière simple au serveur informatique et ensuite à un destinataire tel qu'une autorité de surveillance routière ou une autorité de surveillance de la pollution. Il est en outre possible de collecter des données en provenance de plusieurs bornes de paiement, ce qui permet de collecter facilement des données sur une zone étendue.

La borne de paiement peut comprendre une ou plusieurs des caractéristiques optionnelles suivantes, prises isolément ou selon toutes les combinaisons techniquement possibles :
- la borne de paiement est un horodateur de stationnement configuré pour délivrer des titres de stationnement,
- le dispositif de capture de données est configuré pour capturer des données biométriques de piétons situés dans une zone surveillée à proximité de la borne de paiement, la zone surveillée étant au moins partiellement distincte d'une zone d'utilisation de la borne de paiement dans laquelle se tient un utilisateur pour utiliser la borne de paiement,
- le dispositif de capture de données comprend au moins un capteur de données biométriques choisi parmi un capteur d'empreinte digitale, un capteur d'empreinte palmaire, un capteur d'empreinte oculaire, un capteur d'empreinte faciale et un capteur d'empreinte vasculaire,
- le dispositif de capture de données comprend au moins un capteur de données de circulation choisi parmi un détecteur de vitesse, un détecteur de franchissement de feu rouge, un détecteur de refus de priorité aux piétons, un détecteur de refus de priorité entre véhicules, un dispositif de lecture de plaque minéralogique et une caméra de surveillance de trafic routier orientée pour surveiller le trafic routier sur une chaussée située à proximité de la borne de paiement,
- le dispositif de capture de données comprend au moins un capteur de données environnementales choisi parmi un capteur de luminosité, un capteur de bruit, un capteur de température atmosphérique, un capteur de pression atmosphérique, un capteur d'hygrométrie, un capteur de pluviométrie, un capteur d'allergènes, un détecteur de particules et un capteur de gaz propre à détecter la concentration de l'air en un ou plusieurs gaz, en particulier la concentration de l'air en CO₂,
- la borne comprend en outre un dispositif de lecture optique configuré pour lire un code optique,
- la borne comprend en outre un dispositif de communication additionnel configuré pour communiquer avec un appareil électronique communiquant situé à proximité de la borne de paiement, par l'intermédiaire d'une liaison sans fil ou filaire,
- la borne comprend en outre un générateur de signal sonore et/ou visuel configuré pour générer un signal sonore et/ou visuel perceptible par un piéton ou un conducteur d'un véhicule.

L'invention concerne également un système de gestion comprenant une pluralité de bornes de paiement telles que défini ci-dessus, un serveur informatique en communication avec chaque borne de paiement, le serveur informatique étant configuré pour recevoir les données capturées par les dispositifs de capture de données des bornes de paiement, ainsi que pour envoyer les données capturées à au moins un destinataire et/ou pour envoyer des instructions aux bornes de paiement en fonction des données capturées.

L'invention concerne encore un procédé de collecte de données, à partir d'au moins une borne de paiement disposée en voirie et utilisable pour l'achat d'un produit et/ou d'un service, chaque borne de paiement appartenant à un système de de gestion de produit et/ou de service comprenant un serveur informatique en communication avec chaque borne de paiement, le procédé de collecte de données comprenant la capture de données de circulation relatives à des véhicules circulant à proximité de la borne de paiement et/ou de données environnementales relatives à la qualité de l'environnement à proximité de la borne de paiement, et la transmission des données capturées au serveur informatique par ladite borne de paiement.

L'invention et ses avantages seront mieux compris à la lecture de la description qui va suivre, donnée uniquement à titre d'exemple non limitatif, et faite en référence aux dessins annexés, sur lesquels :
- la Figure 1 est une vue schématique d'ensemble d'un système de gestion de produit et/ou de service comprenant une pluralité de bornes de paiement disposées en voirie ;
- la Figure 2 est un organigramme illustrant des étapes d'un procédé de collecte de données mis en oeuvre à l'aide du système de gestion.

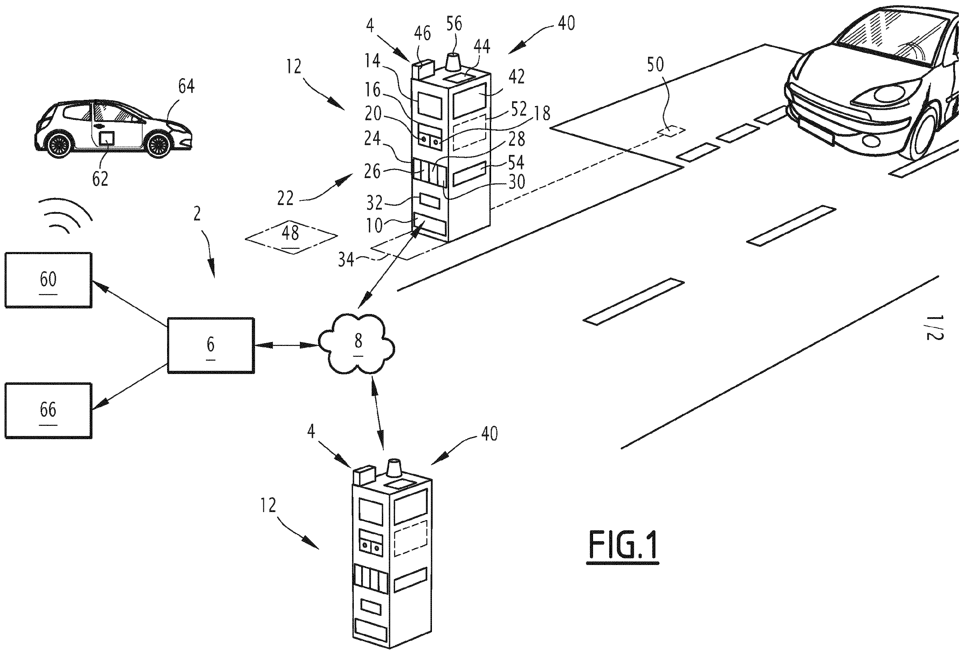

Tel qu'illustré sur la Figure 1, le système de gestion 2 de produit et/ou de service est configuré pour permettre à des utilisateurs d'acheter un produit et/ou un service.

Le système de gestion 2 comprend une pluralité de bornes de paiement 4, chaque borne de paiement 4 étant disposée en voirie, et un serveur informatique 6 en communication avec chacune des bornes de paiement 4 par l'intermédiaire d'un réseau de communication 8.

Dans la présente description, un « utilisateur » désigne une personne utilisant une borne de paiement 4 du système de gestion 2 pour l'achat d'un produit et/ou d'un service. Un « piéton » ou un « individu » désigne une personne n'utilisant pas de borne de paiement 4 pour l'achat d'un produit et/ou d'un service, mais pouvant si situer sur la voirie à proximité de la borne de paiement 4.

La « voirie » comprend la chaussée réservée à la circulation des voitures, les places de stationnement réservées au stationnement des véhicules, et les trottoirs et les places piétonnières réservés à la circulation des piétons.

Dans l'exemple illustré, chaque borne de paiement 4 est un horodateur de stationnement. Chaque borne de paiement 4 est ainsi configurée pour délivrer des titres de stationnement, permettant à l'utilisateur de stationner son véhicule sur une place de stationnement.

Dans un autre exemple, chaque borne de paiement 4 est configurée pour délivrer des titres de transport permettant d'utiliser des transports en commun (bus, métro, tramway, train...).

Chaque borne de paiement 4 est en communication avec le serveur informatique 6 pour l'échange de données.

Chaque borne de paiement 4 comprend ici un dispositif de communication 10 configuré pour communiquer avec le serveur informatique 6 par l'intermédiaire du réseau de communication 8. La borne de paiement 4 communique avec le serveur informatique 6 par l'intermédiaire du dispositif de communication 10.

Le réseau de communication 8 est un réseau de communication avec fil ou sans fil. Le réseau de communication 8 est par exemple un réseau téléphonique filaire, un réseau téléphonique mobile (GSM, UMTS, LTE, LTE Catégorie 4, LTE Catégorie 1, LTE Catégorie M1, LTE catégorie NB1...), un réseau informatique (LAN, WAN), le réseau Internet, un réseau local (WIFI, Bluetooth, Lora, Lifi, Zigbee, Z-Wave, Dust, ANT+, NFC)...

Chaque borne de paiement 4 est interactive pour permettre à l'utilisateur d'interagir avec la borne de paiement 4, notamment pour sélectionner un produit et/ou un service.

Chaque borne de paiement 4 comprend un dispositif d'interface homme-machine 12 permettant à l'utilisateur d'interagir avec la borne de paiement 4 pour l'achat d'un produit et/ou d'un service. Le dispositif d'interface homme-machine 12 permet par exemple à l'utilisateur de sélectionner un produit et/ou un service qu'il souhaite acheter.

Le dispositif d'interface homme-machine 12 comprend par exemple un dispositif d'affichage d'images 14, un dispositif de pointage 16 pour la sélection de champs et/ou de bouton dans une interface graphique utilisateur, un clavier alphanumérique 18 pour la saisie de caractères alphanumériques et/ou un ou plusieurs boutons 20 physiques. Le dispositif d'affichage 14 d'images est par exemple un écran, notamment un écran tactile pour permettre de pointer et/ou de saisir des données directement sur l'écran.

Chaque borne de paiement 4 comprend un dispositif de paiement 22 permettant à un utilisateur de payer un produit et/ou un service par l'intermédiaire de la borne de paiement 4.

Le dispositif de paiement 22 comprend par exemple un terminal de paiement électronique 24 configuré pour le paiement par carte, notamment par carte à puce, en particulier par carte privative ou bancaire, un sélecteur de monnaie 26 configuré pour le paiement avec un ou plusieurs pièces de monnaie, un lecteur de billet de banque 28 configuré pour le paiement avec un ou plusieurs billets de banques et/ou un terminal de paiement sans contact 30 configuré pour le paiement avec un dispositif électronique (carte à puce, ordiphone...) avec une communication sans contact entre le terminal de paiement sans contact et le dispositif électronique, par exemple par une communication en champs proche (ou NFC pour « *Near Field Communication* » en anglais).

Chaque borne de paiement 4 peut comprendre en option un dispositif d'impression 32 pour l'impression d'un reçu, par exemple un ticket de stationnement.

Chaque borne de paiement 4 possède une zone d'utilisation 34 qui est la zone dans laquelle doit se tenir un utilisateur pour pouvoir utiliser la borne de paiement 4, et en particulier pour pouvoir utiliser le dispositif d'interface homme-machine 12 de la borne de paiement 4 et le dispositif de paiement de la borne de paiement 4. La zone d'utilisation 34 est ainsi constituée par l'espace d'un à deux mètres carrés situés devant la borne de paiement 4.

Chaque borne de paiement 4 est munie d'un dispositif de capture de données 40 configuré pour capter des données de circulation relatives à des véhicules circulant sur la chaussée à proximité de la borne de paiement 4 et/ou pour capter des données environnementales relatives à la qualité de l'environnement à proximité de la borne de paiement 4.

Chaque borne de paiement 4 est configurée pour l'envoi des données capturées par le dispositif de capture de données 40 au serveur informatique 6, ici par l'intermédiaire du dispositif de communication de la borne de paiement 4.

Le dispositif de capture de données 40 est configuré pour capturer des données indépendamment de l'achat d'un produit et/ou d'un service par l'intermédiaire de la borne de paiement 4.

Le dispositif de capture de données 40 est configuré pour capturer des données de manière automatique, en l'absence d'interaction d'un utilisateur avec la borne de paiement 4 pour l'achat d'un produit et/ou d'un service.

Le dispositif de capture de données 40 est configuré pour capturer des données y compris lorsqu'aucun utilisateur n'utilise le dispositif de paiement 22.

Le dispositif de capture de données 40 comprend au moins un capteur de données pour capter des données de circulation routière ou des données environnementales. Chaque capteur de données du dispositif de capture de données est porté par la borne de paiement 4.

Dans un exemple de réalisation, le dispositif de capture de données 40 comprend au moins un capteur de données de circulation 42 pour capter des données de circulation routière.

Les données de circulation routières sont des données relatives à la circulation des véhicules sur la chaussée et/ou aux véhicules stationnant sur les places de stationnement.

Chaque capteur de données de circulation 42 est configuré et positionnée sur la borne de paiement 4 pour capter des données relatives aux véhicules circulant sur la chaussée et/ou des données relatives aux véhicules stationnant sur les places de stationnement.

Chaque capteur de données de circulation 42 est par exemple choisi parmi un détecteur de vitesse configuré pour mesurer la vitesse de véhicules, un détecteur de franchissement de feu rouge configuré pour détecter lorsqu'un véhicule franchit un feu rouge, un détecter de refus de priorité aux piétons configuré pour détecter lorsqu'un véhicule refuse la priorité à un piéton, notamment sur un passage piéton, un dispositif de lecture de plaque minéralogique configuré pour lire de manière automatisée les plaques minéralogiques des véhicules circulant sur la chaussée, une caméra de surveillance de trafic routier orientée pour surveiller le trafic routier sur une chaussée située à proximité de la borne de paiement 4.

En option, chaque capteur de donnée de circulation 42 est en outre configuré pour surveiller la présence de véhicules en stationnement, par exemple par capture d'images et analyse des images capturées pour la détection de véhicules en stationnement.

Dans un exemple de réalisation, le dispositif de capture de données 40 comprend au moins un capteur de données environnementales 44, i.e. de données relativement à l'environnement autour de la borne de paiement 4 (luminosité, bruit, température, pression, hygrométrie, pluviométrie, présence d'allergènes dans l'air, présence de certains gaz dans l'air, présence de particule dans l'air...).

Chaque capteur de données environnementales 44 est par exemple choisi parmi un capteur de luminosité, un capteur de bruit, un capteur de température atmosphérique, un capteur de pression atmosphérique, un capteur d'hygrométrie, un capteur de pluviométrie, un détecteur d'allergènes, un détecteur de particules et un détecteur de gaz propre à détecter la concentration de l'air en un ou plusieurs gaz, en particulier la concentration de l'air en CO₂.

La borne de paiement 4 située sur la voie publique où passent les piétons, elle forme un support approprié pour un capteur de données environnementales 44 qui peut ainsi mesurer des grandeurs environnementales telles qu'elles sont effectivement perçues par les piétons.

En option, la borne de paiement 4 comprend au moins un capteur de données biométriques 46. Chaque capteur de données biométriques 46 est configuré pour acquérir des données biométriques d'un individu ou d'un piéton situé à proximité de la borne de paiement 4.

Chaque capteur de données biométriques 46 est par exemple choisi parmi un capteur d'empreinte digitale, un capteur d'empreinte palmaire (i.e. une empreinte de la paume de la main d'un individu), un capteur d'empreinte oculaire (i.e. empreinte de l'iris d'un individu), un capteur d'empreinte faciale (i.e. empreinte du visage d'un individu)....

Un capteur d'empreinte faciale ou oculaire comprend par exemple une caméra disposée sur la borne de paiement 4 de manière à capturer des images du visage et/ou de l'iris d'individus situés à proximité de la borne de paiement 4, en particulier hors de la zone d'utilisation, et un module de reconnaissance configuré pour déterminer une ou plusieurs empreinte(s) faciale(s) ou oculaire(s) à partir d'une image capturée par la caméra.

Dans un exemple de réalisation, la borne de paiement 4 comprend au moins un capteur de données biométriques 46 positionné pour capturer des données biométriques d'un individu situé dans une zone de surveillance 48 au moins en partie distincte de la zone d'utilisation 34. Le capteur de données biométriques est ainsi positionné notamment pour capturer des données biométriques d'un individu situé hors de la zone d'utilisation de la borne de paiement 4. Ainsi, la borne de paiement 4 permet de surveiller une zone située autour de la borne de paiement 4, y compris hors de la zone d'utilisation.

La borne de paiement 4 située sur la voirie forme un support approprié pour un capteur de données biométriques 46, par exemple pour la recherche d'individus recherchés par des forces de l'ordre.

En option, chaque borne de paiement 4 porte un capteur de présence de véhicule et/ou est en communication avec au moins un capteur de présence de véhicule 50 configuré pour détecter la présence d'un véhicule sur une place de stationnement située à proximité de la borne de paiement 4.

Ceci permet par exemple à la borne de paiement 4 de signaler les places de stationnement disponibles à proximité de cette borne de paiement 4.

En option, la borne de paiement 4 comprend au moins un dispositif de communication additionnel 52 permettant d'échanger des données avec un appareil électronique situé à proximité de la borne de paiement 4.

Le dispositif de communication additionnel 52 est configuré pour une communication sans fil ou avec fil. Un dispositif de communication additionnel 52 sans fil est par exemple configuré pour une communication selon au moins un protocole de communication choisi parmi le WIFI, le Bluetooth et LORA, par exemple à la fréquence de 433 MHz. Un dispositif de communication additionnel 52 avec fil est par exemple un connecteur permettant de brancher un appareil électronique sur la borne de paiement 4, par exemple un connecteur USB.

En option, la borne de paiement 4 comprend en outre au moins un dispositif de lecture optique 54 configuré pour lire un code optique. Un « code optique » désigne ici une image présente sur un support physique (plan, carte, feuille de papier, écran d'un ordiphone), et contenant des informations codées. Un code optique est par exemple un code barre ou un code matriciel aussi désigné « QR code ».

La lecture du code optique permet par exemple d'interroger le serveur informatique 6 pour récupérer des informations en rapport avec ce code optique et pour les transmettre à l'individu, en affichant et/ou en imprimant ces informations et/ou en communiquant ces informations à un appareil électronique de l'individu.

En option, chaque borne de paiement 4 comprend au moins un générateur de signal lumineux 56 configuré pour générer un signal lumineux perceptible par un individu situé à proximité de la borne de paiement 4. Chaque générateur de signal lumineux 56 est porté par la borne de paiement 4.

Chaque générateur de signal lumineux 56 est par exemple choisi parmi un gyrophare, un projecteur d'image configuré pour projeter une image sur une surface (sol, mur...), un motif lumineux placé sur la borne de paiement 4, un panneau lumineux permettant l'affichage de messages ou de pictogrammes lumineux...

Chaque générateur de signal lumineux 56 est distinct du dispositif d'interface homme-machine 12 servant à l'utilisateur pour l'achat d'un produit et/ou d'un service.

Chaque générateur de signal lumineux 56 est actif indépendamment du dispositif d'interface homme-machine 12.

Chaque générateur de signal lumineux 56 est configuré pour générer un signal lumineux qui soit perceptible par un utilisateur situé hors de la zone d'utilisation.

En particulier, dans un exemple de réalisation, chaque générateur de signal lumineux 56 est configuré pour la génération d'un signal lumineux qui soit perceptible par les conducteurs de véhicule circulant sur une chaussée située à proximité de la borne de paiement 4.

Chaque borne de paiement 4 est configurée pour l'envoi de données relatives à l'achat d'un produit et/ou d'un service et de données capturées par le dispositif de capture de données 40 vers le serveur informatique 6, par l'intermédiaire du dispositif de communication 10.

Le cas échéant, chaque borne de paiement 4 est configurée pour l'envoi de données acquises par chaque capteur de données biométriques 48, par des capteurs de présence de véhicule 50 par le dispositif de communication additionnel 52 et/ou par le dispositif de lecture optique 54.

Le serveur informatique 6 est configuré pour traiter les données envoyées par chaque borne de paiement 4.

Les données fournies par plusieurs bornes de paiement 4 peuvent être traitées individuellement, lorsqu'il s'agit de données indépendantes les unes des autres, ou collectivement lorsqu'il s'agit de données dépendantes les unes des autres.

A titre d'exemple, des données relatives à un excès de vitesse détecté par un radar de vitesse disposé sur une borne de paiement 4 sont propres à cette borne de paiement 4 et indépendantes d'autres données capturées par d'autres bornes de paiement 4, tandis que des données relatives à un bouchon détecté par plusieurs bornes de paiement 4 sont dépendantes car elles permettent de déterminer la longueur du bouchon.

Le serveur informatique 6 est configuré pour envoyer des données capturées par une ou plusieurs bornes de paiement 4 vers un ou plusieurs destinataires, notamment les données de circulation et les données environnementales capturées par le dispositif de capture de données 40.

Le serveur informatique 6 est par exemple configuré pour envoyer des données de circulation vers un ou plusieurs fournisseur(s) de données de trafic routier 60 transmettant des données à des dispositifs électroniques embarqués 62 dans des véhicules 64 et/ou vers une ou plusieurs autorités 66 ayant en charge la régulation et/ou la surveillance de la circulation.

Des données de trafic routier comprennent par exemple la localisation de bouchons, la présence de travaux, la présence de radars, le passage d'un véhicule prioritaire, la vitesse maximale autorisée...

Chaque fournisseur de données trafic routier 60 diffuse par exemple les données de trafic routier par l'intermédiaire d'un signal radio émis vers les véhicules équipés d'un dispositif électronique embarqué 62 propre à capter ce signal radio, par exemple un récepteur de géolocalisation.

Chaque fournisseur de données de trafic routier 60 peut par exemple utiliser les données de circulation capturées par le dispositif de capture de données d'une ou plusieurs bornes de paiement 4 pour envoyer des informations correspondantes aux véhicules.

Des informations sont par exemple un évènement nécessitant une vigilance particulière du conducteur (incident routier, un accident routier, travaux sur la route ou sur le bas-côté, la présence d'une classe en sortie scolaire...).

Chaque fournisseur de données de trafic routier 60 peut par exemple envoyer à chaque véhicule un signal de limitation de vitesse et/ou un signal de freinage, de sorte que le véhicule limite automatiquement sa vitesse et/ou freine automatiquement pour tenir compte d'un incident, d'un accident ou d'un évènement sur la route.

En option ou en variante, le serveur informatique 6 est configuré pour envoyer des données capturées par le dispositif de capture de données 40 d'une ou plusieurs bornes de paiement 4 vers une ou plusieurs autorité(s) 66, par exemple des forces de l'ordre et/ou des services de secours.

Dans un exemple particulier, le serveur informatique 6 est configuré pour envoyer aux forces de l'ordre des données de circulation routière relatives à une infraction du code de la route détectée par un capteur de données de circulation d'une borne de paiement 4. L'infraction sera ainsi verbalisée.

Dans un exemple particulier, le serveur informatique 6 est configuré pour envoyer aux forces de l'ordre des données relatives à un évènement routier. Les forces de l'ordre peuvent ainsi envoyer des secours à d'éventuelles victimes d'un accident.

Dans un exemple particulier, le serveur informatique 6 est configuré pour envoyer des données environnementales à une autorité de contrôle environnemental. Cette dernière pourra par exemple prendre des mesures de limitation temporaire de la vitesse maximale autorisée.

En option, le serveur informatique 6 est configuré pour envoyer des instructions à une ou plusieurs borne(s) de paiement 4 pour la génération d'un signal lumineux par la ou chaque borne de paiement 4, à l'aide du ou des générateur(s) de signal lumineux de cette ou de ces borne(s) de paiement.

Le serveur informatique 6 est configuré pour commander la génération de signaux lumineux relatifs à un évènement programmé enregistré préalablement dans le serveur informatique 6 ou un évènement détecté par une ou plusieurs borne(s) de paiement à l'aide de son ou de leurs dispositif(s) de capture de données.

Le serveur informatique 6 comprend un dispositif de programmation permettant la programmation d'événements programmés. Le dispositif de programmation est par exemple accessible par une ou plusieurs autorités administratives pour signaler un évènement particulier.

Un évènement programmé est par exemple une sortie scolaire prévue à une heure déterminée et suivant un trajet particulier sur la voirie.

Dans un tel cas, le serveur informatique 6 est avantageusement configuré pour commander les bornes de paiement 4 situées sur ledit trajet pour la génération de signaux visuels perceptibles par les conducteurs des véhicules afin de les inciter à la prudence et/ou de diminuer temporairement la vitesse maximale autorisée.

Des évènements programmés sont par exemple des travaux sur la route ou les bas-côtés de la route, une manifestation pouvant perturber le trafic routier ou un évènement culturel pouvant intéresser les piétons ou les conducteurs de véhicule. Ceci permet par exemple à la mairie d'une ville de communiquer par l'intermédiaire des bornes de paiement 4.

Un évènement détecté est par exemple un évènement routier (accident, incident...) nécessitant une vigilance accrue des conducteurs de véhicules circulant sur la route ou une pollution excessive entraînant une limitation de la vitesse de circulation des véhicules.

Le serveur informatique 6 est par exemple configuré pour l'envoi de données par une ou plusieurs bornes de paiement 4 munies d'un dispositif de communication additionnel, à des appareils électroniques communiquant de piétons présents à proximité de ces bornes de paiement 4.

Les données envoyées aux piétons sont par exemple des informations signalant un évènement (incident, accident, alerte à la pollution, manifestation, évènement culturel...).

Les bornes de paiement 4 peuvent ainsi être utilisées comme système de diffusion d'information vers les piétons. Elles permettent une diffusion efficace d'information du fait de leur maillage dense sur la voie publique, permettant une transmission d'information fiable du fait de leur proximité avec les piétons.

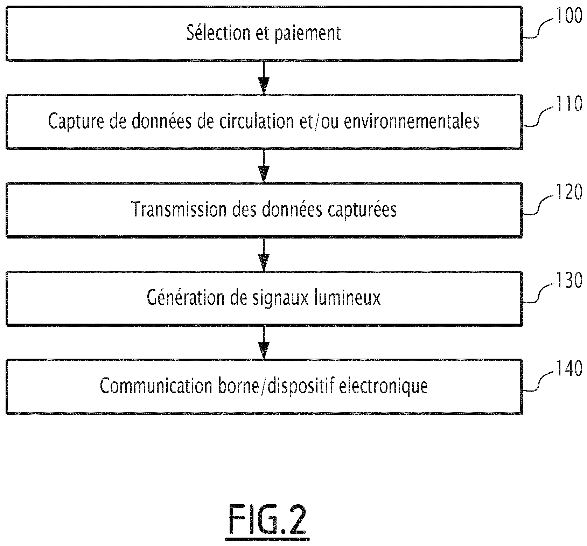

Le fonctionnement du système de gestion 2 va maintenant être décrit en référence à la Figure 2 représentant un organigramme d'un procédé de collecte de données mis en oeuvre par ordinateur.

Dans une étape de paiement 100, un utilisateur utilise une borne de paiement 4 du système de gestion 2 pour sélectionner et payer un produit ou un service.

Dans une étape de capture de données 110, le dispositif de capture de données de chaque borne de paiement 4 capture des données de circulation et/ou des données environnementales, et la borne de paiement 4 envoie ces données au serveur informatique 6.

Dans une étape de transmission 120, le serveur informatique 6 envoie les données capturée et éventuellement traitées vers un ou plusieurs destinataire(s). Les données capturées sont envoyées en chaque destinataire en fonction de la nature de ces données capturées.

Lorsque des données traitées relatives à la circulation routière sont envoyées à des fournisseurs de données de trafic routier 60 ou à des autorités 66, ces fournisseurs et ces autorités peuvent éventuellement prendre des mesures, par exemple pour l'envoie d'informations de trafic routier aux véhicules, pour la verbalisation d'infractions routières, pour l'envoie de secours sur le lieu d'un incident ou d'un accident, pour la mise en place d'une limitation de vitesse...

Dans une étape de signalisation 130, le serveur informatique 6 envoie des instructions à une ou plusieurs bornes de paiement 4 pour la génération de signaux visuels à l'attention de piétons ou de conducteurs de véhicules circulant sur la chaussée.

Chaque signal généré est par exemple un signal lumineux intermittent, un hologramme, un pictogramme, une image projetée sur une surface...

Les signaux générés peuvent signaler un évènement détecté par une ou plusieurs bornes de paiement 4 (ralentissement, bouchon, accident, travaux) ou un évènement programmé (sortie scolaire, manifestation...).

Dans une étape d'information 140, au moins une borne de paiement 4 communique avec au moins un appareil électronique portatif d'un piéton.

Un piéton peut par exemple interroger une borne de paiement 4 à l'aide de son appareil électronique portatif. Dans ce cas, la borne de paiement 4 fournir l'information demandée à partir de sa mémoire ou en interrogeant le serveur informatique 6 si l'information n'est pas disponible dans sa mémoire locale.

Par ailleurs, un piéton peut signaler un évènement à une borne de paiement 4 à l'aide de son appareil électronique portatif. Dans ce cas, la borne de paiement 4 peut transmettre les données fournies par le piéton au serveur informatique 6 qui peut transmettre les données à d'autres bornes de paiement 4 pour que ces bornes de paiement 4 diffusent l'information à d'autres piétons par l'intermédiaire de leur dispositif de communication.

Ce canal de communication peut également être utilisé pour la diffusion d'informations à l'attention des piétons, en entrant des informations dans le serveur informatique 6 et en demandant la diffusion de ces informations par l'intermédiaire d'une ou plusieurs bornes de paiement 4 qui forment alors des relais de diffusion d'information.

Ces informations sont par exemple relatives à un événement, une manifestation, une pollution...

L'utilisation de bornes de paiement 4 situées en voirie et connectées à un serveur informatique 6, pour la collecte de données de circulation relatives à la chaussée à proximité des bornes de paiement 4 ou à l'environnement à proximité des bornes de paiement 4 permet de collecter des données pertinentes, sur toute la zone couverte par les bornes de paiement 4 du système de gestion 2 de produit et/ou de service.

Les bornes de paiement 4 réparties en différents lieux permettent de collecter les informations dans ces différents lieux. En outre elles sont disposées à proximité des piétons et souvent des voies de circulations, en particulier s'agissant d'horodateurs de stationnement.

Ces bornes de paiement 4 peuvent représenter un maillage dense permettant de collecter un grande de données ce qui augmente la précision, notamment lorsqu'il s'agit de données relative à la circulation (ralentissement, bouchon) ou à la pollution atmosphérique.

Ces bornes de paiement 4 peuvent en option être utilisées comme des bornes de signalisation permettant de générer des signaux visuels à l'attention des piétons et/ou des conducteurs de véhicule, lorsqu'elles sont équipées de dispositif de génération de signaux correspondants. Elles peuvent ainsi servir de borne de diffusion d'information.

Les bornes de paiement 4 étant reliées à un serveur informatique 6, les données capturées par les bornes de paiement 4 peuvent être transmise au service informatique par le biais de réseau de communication 8 reliant les bornes de paiement 4 au serveur informatique 6.

## Revendications

1. Borne de paiement (4) disposée en voirie et utilisable pour l'achat d'un produit et/ou d'un service, la borne de paiement (4) étant configurée pour communiquer avec un serveur informatique (6) distant, dans lequel la borne de paiement (4) est munie d'un dispositif de capture de données (40) configuré pour capter des données de circulation relatives à des véhicules circulant à proximité de la borne de paiement (4) et/ou pour capter des données environnementales relatives à la qualité de l'environnement à proximité de la borne de paiement (4), la borne de paiement (4) étant configurée pour l'envoi des données capturées au serveur informatique (6).

2. Borne de paiement (4) selon la revendication 1, dans laquelle la borne de paiement (4) est un horodateur de stationnement configuré pour délivrer des titres de stationnement.

3. Borne de paiement (4) selon la revendication 1 ou 2, dans laquelle le dispositif de capture de données (40) est configuré pour capturer des données biométriques de piétons situés dans une zone surveillée à proximité de la borne de paiement (4), la zone surveillée étant au moins partiellement distincte d'une zone d'utilisation de la borne de paiement (4) dans laquelle se tient un utilisateur pour utiliser la borne de paiement (4).

4. Borne de paiement (4) selon l'une quelconque des revendications précédentes, dans laquelle le dispositif de capture de données (40) comprend au moins un capteur de données biométriques choisi parmi un capteur d'empreinte digitale, un capteur d'empreinte palmaire, un capteur d'empreinte oculaire, un capteur d'empreinte faciale et un capteur d'empreinte vasculaire.

5. Borne de paiement (4) selon l'une quelconque des revendications précédentes, dans laquelle le dispositif de capture de données (40) comprend au moins un capteur de données de circulation choisi parmi un détecteur de vitesse, un détecteur de franchissement de feu rouge, un détecteur de refus de priorité aux piétons, un détecteur de refus de priorité entre véhicules, un dispositif de lecture de plaque minéralogique et une caméra de surveillance de trafic routier orientée pour surveiller le trafic routier sur une chaussée située à proximité de la borne de paiement (4).

6. Borne de paiement (4) selon l'une quelconque des revendications précédentes, dans lequel le dispositif de capture de données (40) comprend au moins un capteur de données environnementales choisi parmi un capteur de luminosité, un capteur de bruit, un capteur de température atmosphérique, un capteur de pression atmosphérique, un capteur d'hygrométrie, un capteur de pluviométrie, un capteur d'allergènes, un détecteur de particules et un capteur de gaz propre à détecter la concentration de l'air en un ou plusieurs gaz, en particulier la concentration de l'air en CO₂.

7. Borne de paiement (4) selon l'une quelconque des revendications précédentes, comprenant en outre un dispositif de lecture optique (54) configuré pour lire un code optique.

8. Borne de paiement (4) selon l'une quelconque des revendications précédentes, comprenant en outre un dispositif de communication additionnel configuré pour communiquer avec un appareil électronique communiquant situé à proximité de la borne de paiement 4, par l'intermédiaire d'une liaison sans fil ou filaire.

9. Borne de paiement (4) selon l'une quelconque des revendications précédentes, comprenant en outre un générateur (56) de signal sonore et/ou visuel configuré pour générer un signal sonore et/ou visuel perceptible par un piéton ou un conducteur d'un véhicule.

10. Système de gestion (2) d'un produit et/ou d'un service, le système de gestion 2 comprenant une pluralité de bornes de paiement (4) selon l'une quelconque des revendications précédentes, un serveur informatique (6) en communication avec chaque borne de paiement (4), le serveur informatique (6) étant configuré pour recevoir les données capturées par les dispositifs de capture de données des bornes de paiement 4, ainsi que pour envoyer les données capturées à au moins un destinataire et/ou pour envoyer des instructions aux bornes de paiement (4) en fonction des données capturées.

11. Procédé de collecte de données, à partir d'au moins une borne de paiement (4) disposée en voirie et utilisable pour l'achat d'un produit et/ou d'un service, chaque borne de paiement (4) appartenant à un système de de gestion de produit et/ou de service comprenant un serveur informatique (6) en communication avec chaque borne de paiement (4), le procédé de collecte de données comprenant :
- la capture de données de circulation relatives à des véhicules circulant à proximité de la borne de paiement 4 et/ou de données environnementales relatives à la qualité de l'environnement à proximité de la borne de paiement (4) ; et
- la transmission des données capturées au serveur informatique (6) par ladite borne de paiement (4).
